(19)

Europäisches
Patentamt
European
Patent Office
Office européen
des brevets

(11) **EP 4 481 015 A1**

(12) **EUROPEAN PATENT APPLICATION**

(43) Date of publication:
**25.12.2024  Bulletin 2024/52**

(21) Application number: **24181682.6**

(22) Date of filing: **12.06.2024**

(51) International Patent Classification (IPC):
**C10G 1/00** (2006.01)    **C10G 1/02** (2006.01)
**C10G 1/04** (2006.01)    **C10G 45/00** (2006.01)
**C10G 3/00** (2006.01)    **C10G 49/26** (2006.01)

(52) Cooperative Patent Classification (CPC):
**C10G 1/002; C10G 1/02; C10G 1/04; C10G 3/00;**
**C10G 45/00; C10G 49/26;** C10G 2300/1014

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **22.06.2023  FI 20235724**

(71) Applicant: **UPM-Kymmene Corporation**
**00100 Helsinki (FI)**

(72) Inventors:
• **JOKELA, Pekka**
**00100 Helsinki (FI)**
• **GUTIERREZ, Andrea**
**00100 Helsinki (FI)**

(74) Representative: **Boco IP Oy Ab**
**Kansakoulukatu 3**
**00100 Helsinki (FI)**

(54) **INTEGRATED PROCESS FOR PRODUCING BIOCRUDE**

(57)    The disclosure relates to thermal liquefaction, typically solvolysis of lignin feedstocks originating from an integrated kraft pulp mill, where side stream(s) of the thermal liquefaction is directed to the kraft pulp mill of the integrated process, especially to the recovery boiler of the kraft pulp mill. More in detail the disclosure relates to a process for; converting lignin to renewable liquid product(s) in a thermal treatment process; separating a fraction having a boiling point over 500 °C at atmospheric pressure; and recycling at least part of the fraction having a boiling point over 500 °C at atmospheric pressure to the recovery boiler and/or lime kiln of the kraft pulp mill. The present disclosure further concerns the use of the integrated process for controlling the incineration capacity of the recovery boiler and use of steam and/or electricity from the recovery boiler for heating in the thermal liquefaction step.

Fig 1

**Description**

FIELD OF THE DISCLOSURE

The present invention relates generally to an integrated process comprising thermal liquefaction of lignin, and more particularly to lignin solvolysis of lignin feedstocks originating from a kraft pulp mill, for producing biocrude useful as liquid fuels or fuel blending components. Side stream(s) of the thermal liquefaction are directed to the kraft pulp mill of the integrated process, especially to the recovery boiler and/or lime kiln of the kraft pulp mill. More in detail the disclosure relates to a process for; converting lignin feedstock or lignin-based feedstock in a thermal treatment process; separating a fraction having a boiling point over 500 °C at atmospheric pressure; and recycling at least part of the fraction to the recovery boiler and/or lime kiln of the kraft pulp mill. The present disclosure further concerns the use of the integrated process for controlling the incineration capacity of the recovery boiler, use of a fraction having a boiling point over 500 °C at atmospheric pressure in a recovery boiler and/or lime kiln of a kraft pulp mill as well as use of steam and/or electricity from the recovery boiler for heating in the thermal liquefaction step.

BACKGROUND OF THE DISCLOSURE

Biomass is increasingly recognized as a valuable feedstock to be used as a sustainable alternative to petroleum to produce biofuels and chemicals.

Renewable energy sources represent the potential fuel alternatives to overcome the global energy crises in a sustainable and eco-friendly manner. In future, biofuels and biochemicals may replace the conventional non-renewable energy resources due to their renewability and several other advantages.

Biofuels and biochemicals are typically manufactured from feedstock originating from renewable sources, including oils and fats obtained from plants, animals, algal materials, and fish. One source is lignocellulosic biomass, which refers to plant biomass that is composed of cellulose, hemicellulose, and lignin. Biofuels and biochemicals originating from lignocellulosic biomass can replace fossil fuels from an energy point of view. However, the conversion of cellulose and hemicellulose into fuels and chemicals often leaves lignin as a by-product and lignin removed for example by the kraft process is traditionally burned for its fuel value, providing energy to power the mill.

After cellulose, lignin is the most prevalent biopolymer on earth, but in contrast to other polymers, lignin is more resistant to degradation. Although, utilization of lignin as a renewable polymeric material is recognized, lignin utilization is still limited, especially since high-lignin containing biomasses are susceptible to tar and char formation, and often produce significant amount of solid residues.

Converting biomass into renewable fuels and chemicals usually involves thermal treatment of the biomass and a promising technology is hydrothermal liquefaction (HTL). HTL is usually carried out with liquid water at temperatures between 320 °C and 400 °C. To keep the water in the liquid state or supercritical state very high operational pressures of 200 bar or above are needed.

Despite the ongoing research and development in the processing of feedstocks and manufacture of fuels, there is still a need to provide an improved process for converting biomass, particularly lignin, to valuable chemicals and biocrudes suitable as fuels or fuel blending components and utilizing side streams of the process.

BRIEF DESCRIPTION OF THE DISCLOSURE

The invention provides methods for producing renewable liquid product(s) from lignin feedstock obtained from a kraft pulp mill or a mixture of lignin feedstock from the kraft pulp mill and one or more other renewable feedstock(s), typically a solid renewable feedstock, preferably sawdust, where the kraft pulp mill is integrated to a thermal liquefaction step, typically a solvolysis step. The method generally involves providing a sole lignin feedstock or a lignin-based feedstock in a feed mixture to be used in thermal liquefaction, typically by solvolysis. A renewable product, a biocrude consisting mainly of oxygen containing hydrocarbons is produced, and the product can be used as such, can be upgraded, can be recycled in the integrated process and/or upgraded further.

The disclosure is based on the idea of integrating a thermal liquefaction process, typically a solvolysis process, using a feed comprising or consisting of lignin feedstock, with a kraft pulp mill at the same site, to utilize the side streams of the thermal liquefaction, typically of the solvolysis, in the same kraft pulp mill.

An advantage of the integrated process of the disclosure is that the lignin feedstock is obtained from black liquor of the kraft pulp mill, which causes off-loading of the recovery boiler of the kraft pulp mill. Especially if the capacity of the recovery boiler is a bottle neck of the pulping process, an increase in pulping capacity is achieved, for example an increase in capacity of 10 wt-%.

Further, by recycling at least part of a fraction, having a boiling point over 500 °C at atmospheric pressure, separated after thermal liquefaction, typically solvolysis, of the lignin feedstock or lignin-based feedstock, to the recovery boiler of the kraft pulp mill, the fraction typically replaces lignin as input energy in the recovery boiler. In other words, as the recirculated fraction compensates for the removed lignin as an energy source in the recovery boiler, the incineration capacity of the recovery boiler is maintained and/or at least enhanced compared to a situation where the fraction, recirculated from the solvolysis process and having a boiling point over 500 °C at atmospheric pressure, is not directed to the recovery boiler, and more black liquor can be used for the extraction of lignin. Typically, the increase of extracted lignin is about 50 wt% compared to the 15-30 wt-% of lignin that typically is removed by lignin removal technology without affecting the recovery boiler operation. Higher amounts of extracted lignin enhance the biocrude production.. Using the fraction having a boiling point over 500 °C at atmospheric pressure as energy source in the recovery boiler of the kraft pulp mill, is especially advantageous since the heating value of the recycled fraction is higher than the heating value of black liquor, mostly due to the deoxygenation during the solvolysis. Using the fraction having a boiling point over 500 °C at atmospheric pressure as energy source in the lime kiln of the kraft pulp mill, is especially advantageous due to the high adiabatic flame temperature of the fraction. Thus, the fraction can be used to meet lime kiln fuel demand. Further advantages are received when the recycled fraction replaces the use of fossil fuel.

Further, since the solvolysis does not need any chemicals or catalyst, the ash content (inorganics) of the fraction typically comprises only residues of cooking chemicals and traces of sulphuric acid used in lignin extraction process, and no or minor amounts of extra non-process elements (NPEs) are added to the recovery cycle. When the feedstock is lignin-based feedstock comprising for example sawdust as part of the feed mixture, a minor addition to NPEs from the feedstock typically occurs. Using other renewable feedstock(s) with low ash content is therefore advantageous, for example using a lignin-based feedstock comprising lignin obtained from black liquor of the kraft pulp mill and sawdust with low ash content. Typically, sawdust used as part of the lignin-based feedstock comprises 0.1 - 5 wt%, preferably 0.1 - 4 wt%, more preferably 0.1 - 2.5, most preferably 0.2 - 06 wt% ash.

The fraction having a boiling point over 500 °C at atmospheric pressure which is returned to recovery boiler and/or lime kiln is basically non-dissolved, non-depolymerized or repolymerized lignin that has exposed to the elevated temperature in the solvolysis process. Due to the solvolysis process conditions, the lignin is typically deoxygenated and thus the returned lignin has enhanced heating value. Optionally also non-dissolved material separated from an optional pretreatment, before the solvolysis, is directed to the recovery boiler. Optionally part of the fraction having a boiling point over 500 °C at atmospheric pressure is directed both to the recovery boiler and the lime kiln of the kraft pulp mill.

Further, if a recycled product fraction comprising at least part of fraction(s) having a boiling point at or below 500 °C at atmospheric pressure, as solvent in the solvolysis step, the pressure is kept low, but still the oil yield, i.e. the yield of the liquid product increases or is maintained and formation of coke and undesired polymerization reactions are avoided. Further, the amount of oxygen in the oil products decreases. By adjusting process conditions, the oxygen content of the oil products can be altered. Lower oxygen contents correspond to better product quality.

Further, also other fractions unsuitable for solvolysis or upgrading to products can be returned to the pulping process. For example, the water from the solvolysis, that is introduced with the feed and/or which is formed in the process, can optionally be returned to a wastewater treatment plant (WWTP) of the kraft pulp mill of the integrated process in form of an aqueous phase. The formation of aqueous phase in solvolysis indicates that deoxygenation took place during the reaction. Separated gas can optionally be directed to the recovery boiler, to the odorous gas boiler and/or to the bark boiler of the kraft pulp mill of the integrated process.

Further advantages of the integrated process are obtained if steam and/or electricity from the recovery boiler is used for heating in the thermal liquefaction, typically the solvolysis, and/or if for example tall oil pitch is available and is burned to be used for heating in the thermal liquefaction, typically the solvolysis, and/or if superheated live steam from the kraft pulp mill is used for heating in the thermal liquefaction, typically the solvolysis. Preferably, the heating of the thermal liquefaction step, typically the solvolysis step, is performed by means of the integrated process, preferably by using steam and/or electricity from the recovery boiler, energy of the electrical boiler of the kraft pulp mill which heats hot oil used for the thermal liquefaction step, typically the solvolysis step. In other words, at best no additional heating, from outside the integrated process, is needed.

As the separation of kraft lignin takes place before the solvolysis, the cooking chemicals can be returned to the pulping process at an earlier stage, making sure that the chemical balance of the kraft pulp mill is maintained.

BRIEF DESCRIPTION OF THE DRAWINGS

In the following the disclosure will be described in greater detail by means of preferred embodiments with reference to the accompanying drawings, in which

Figure 1 shows a schematic flow diagram representing one embodiment of the conversion process;

Figure 2 shows a schematic flow diagram representing the embodiment of Figure 1 without pretreatment; and

Figure 3 shows a schematic flow diagram representing another embodiment of the conversion process.

DETAILED DESCRIPTION OF THE DISCLOSURE

An industrially effective and sustainable process for recovering renewable products from lignin is provided, with high yield of liquid product(s), and where lignin feedstock is effectively and economically converted to renewable products. The liquid product(s) and especially fractions thereof are particularly suitable as feedstock for hydroprocessing in biofuels and biochemicals manufacture.

A process is proposed for converting lignin feedstock to renewable liquid product(s) as well as uses relating to the integrated process. The object of the disclosure is achieved by the process and uses as characterized by what is stated in the independent claims. The preferred embodiments of the disclosure are disclosed in the dependent claims.

In embodiments of the disclosure use of the integrated process for controlling incineration capacity of the recovery boiler of the kraft pulp mill of the integrated process is disclosed as well as use of a fraction, having a boiling point above 500 °C at atmospheric pressure, obtained from thermal liquefaction, typically solvolysis, of a lignin feedstock or lignin-based feedstock in a recovery boiler of a kraft pulp mill. Preferably the fraction, having a boiling point above 500 °C at atmospheric pressure, is obtained from the disclosed integrated process and is used in the recovery boiler of the kraft pulp mill of said integrated process. The incineration capacity of the recovery boiler is controlled by decreasing the organic amount of black liquor directed from the kraft pulp process to the recovery boiler and increasing the amount of recycled fraction, having a boiling point above 500 °C at atmospheric pressure directed from the thermal liquefaction, typically solvolysis, to the recovery boiler. Typically, the integrated process is used for controlling incineration capacity of the recovery boiler by decreasing the black liquor, especially the organic material in black liquor, directed from the kraft pulp mill to the recovery boiler and increasing the amount of recycled fraction, having a boiling point above 500 °C at atmospheric pressure to the recovery boiler.

In some embodiments of the disclosure, steam and/ or electricity from the recovery boiler of the integrated process is used for heating of the thermal liquefaction step, typically the solvolysis step of the integrated process of the disclosure.

In the present specification and claims, the following terms have the meanings defined below.

The term "lignin feedstock" as used herein, refers to lignin obtained from the kraft pulp mill. More in general lignin is a complex water-insoluble, long-chain heterogeneous organic polymer composed largely of phenylpropane units which are most commonly linked by ether bonds. Oxidative coupling of primarily three p-hydroxycinnamyl alcohols (monolignols): p-coumaryl, coniferyl and sinapyl alcohols results in lignin. Lignin have generally been classified into three major groups based on the chemical structure of their monomer units: softwood lignin, hardwood lignin, and grass lignin. Hardwood lignin consists mainly of guaiacyl and syringyl units and low levels of p-hydroxyphenyl. Conifer lignin has higher levels of guaiacyl units and low levels of p-hydroxyphenyl. The feedstock of kraft lignin essentially consists of lignin, i.e. the feedstock is essentially free of impurities, such as metals or ash and/or residues from black liquor, such as cellulose, hemicellulose, methanol, and cooking chemicals from the kraft process.

The term "lignin-based feedstock", as used herein, refer to a feedstock comprising or consisting of a mixture of lignin feedstock and one or more other renewable feedstock(s), typically a solid renewable feedstock, preferably sawdust. Other solid renewable feedstocks, as used herein, refers to solid forest industry residues, including forest residues. Typically, the solid forest industry residues are, bark, sawdust, wood chips and other wood residues of softwood and hardwood residues from the forest industry as well as cutting residues, for example branches and treetops of softwood and hardwood. The amount of other renewable feedstock, preferably sawdust, is typically at most 70 wt%, preferably at most 60 wt%, more preferably at most 50 wt%. Typically, the amount of other renewable feedstock, preferably sawdust, is between 1 - 70 wt%. Typically, the lignin-based feedstock comprises 30 - 99 wt% lignin feedstock and 1 - 70 wt% other renewable feedstock, preferably solid forest industry residues, more preferably bark, sawdust, wood chips, branches, treetops or mixtures thereof, most preferably sawdust.

The term "solvent", as used herein, refer to the solvent used as part of the feed mixture in the thermal liquefaction step, typically the solvolysis step. The solvent or a part thereof, is typically recirculated from the process itself, typically a fraction such as a light fraction or middle fraction separated from the product mix or liquid product mix, which are obtained from the thermal liquefaction step. Optionally the solvent is used for pretreatment of the lignin feedstock or lignin-based feedstock of the process. Typically, a different solvent is used at start-up of the process, before a recycled product fraction to be recycled in the process is obtained from the process itself. The "recycled product fraction", recirculated from the process itself, comprises one or more fraction(s) separated by fractionation. Typically, the recycled product fraction comprises part of a "middle fraction" having a boiling point between 300 °C and 600 °C at atmospheric pressure, and/or part of a "light fraction" having a boiling point between above 120 °C and below 300 °C at atmospheric pressure. According to one embodiment of the disclosure the solvent, i.e. the recycled product fraction, is entirely recirculated from the process itself and the lignin feedstock or lignin-based feedstock is the sole feedstock added to the process.

The term "feed mixture", as used herein, is the homogeneous or heterogenous mixture obtained after mixing lignin feedstock or lignin-based feedstock with solvent according to the disclosure.

The terms "fraction", "product fraction", "volatile fraction", "light fraction", "middle fraction", "heavy fraction" , as used herein, refers to fraction(s) obtained from the process itself by fractionation. A person skilled in the art can vary the fractionation or distilling conditions and change the temperature cut point as desired to obtain any desired fraction, boiling in the predetermined ranges. By changing temperature and pressure the skilled person can obtain corresponding fraction(s) to fraction(s) having the claimed boiling point at atmospheric pressure, thus receiving fractions having corresponding features, leading to similar results when the fraction is used as the solvent in the feed mixture or recycled according to the process of the disclosure. The atmospheric pressure, i.e. standard atmosphere (atm) is a unit of pressure defined as 101.325 kPa. The corresponding fractions typically comprises corresponding compounds and/or has a corresponding average molecular weight. Typically, the corresponding fraction(s) is obtained at a pressure chosen from between 2 mbar and 1 bar. The fraction, named "middle fraction(s)" in the present disclosure, is a fraction having a boiling point between 300 °C and 600 °C at atmospheric pressure. Typically, the middle fraction essentially consists of or comprises substantially di-, tri- and tetra-aromatics, preferably at least 90 wt-% di-, tri- and tetra-aromatics, more preferably at least 95 wt-% di-, tri- and tetra-aromatics. Part of the di-, tri- and tetra-aromatics are oxygen containing di-, tri- and tetra-aromatics. Typical middle fraction(s) comprises β-aryl ether substructures (β-O-4); B: resinol substructures (β-β); C: phenylcoumaran substructures (β-5), biphenyl substructures (5-5) and/or biphenyl ether (5-O-4). The middle fraction typically has a molecular weight of between 150 g/mol and 500 g/mol. A fraction named "light fraction(s)" in the present disclosure, is a fraction having a boiling point between above 120 °C and below 300 °C at atmospheric pressure. Typically, the light fraction essentially consists of or comprises substantially monoaromatics, preferably at least 90 wt-% monoaromatics, more preferably at least 95 wt-% monoaromatics. Part of the monoaromatics are oxygen containing monoaromatics. Typically, light fraction(s) has an average molecular weight of approximately 40 - 200 g/mol (based on polystyrene calibration) and typically comprises 5- and 6-carbon cyclic structures with double bonds or saturated ring, containing keto-groups and/or 1-3-methyl groups, phenolic structures with methyl-, methoxy-, propenyl-, carboxyl- side groups, and hydrated phenantrene 3-ring structures with 3-4 double bonds in the ring and side chains. A fraction having a boiling point above 600 °C, at atmospheric pressure is typically named "heavy fraction". Heavy fraction(s) typically has an average molecular weight of above 450 g/mol. Volatiles are typically removed as an aqueous phase, i.e. a fraction comprising water and volatiles, having a boiling point at or below 120 °C at atmospheric pressure. Typically, the middle fraction does essentially not consist of compounds having a boiling point below 120 °C at atmospheric pressure. Typically, the light fraction does essentially not consist of compounds having a boiling point below 120 °C at atmospheric pressure.

The term "pulp mill" refers to a manufacturing facility that converts wood chips or other plant fiber sources, recycled paper or other products containing cellulose into pulp which is directed to a paper mill for further processing. Pulp can be manufactured using mechanical, semi-chemical, or fully chemical methods (kraft and sulphite processes). The main steps in pulp and paper manufacturing are raw material preparation, such as wood debarking and chip making; pulp manufacturing; pulp bleaching; paper manufacturing; and fiber recycling. Pulp mills and paper mills may exist separately or as integrated operations. "Kraft pulp mill" means any stationary source which produces pulp from wood by cooking or digesting wood chips in a water solution of sodium hydroxide and sodium sulphide at high temperature and pressure. Regeneration of the cooking chemicals through a recovery process is also considered part of the kraft pulp mill. A traditional kraft pulp mill can be divided into four main parts: (1) raw material handling; (2) pulping line with an almost closed chemical and energy recovery system; (3) bleaching with an open water system and (4) the external wastewater treatment system. The principal kraft recovery unit operations typically are, evaporation of black liquor, combustion of black liquor in recovery boiler furnace including of formation of sodium sulphide and sodium carbonate, causticizing of sodium carbonate to sodium hydroxide and regeneration of lime mud in lime kiln for reuse in the causticizing plant of the kraft recovery process.

The term "recovery boiler" refers to the part of a kraft process of pulping where chemicals for white liquor are recovered and reformed from black liquor. Typically, the black liquor is burned, and the heat is used to produce high pressure steam, which is used to generate electricity in a turbine. In general, several processes occur in the recovery boiler: combustion of organic material in black liquor to generate heat; reduction of inorganic sulphur compounds to sodium sulphide; production of molten inorganic flow of mainly sodium carbonate and sodium sulphide; recovery of inorganic dust from flue gas to save chemicals; and production of sodium fume to capture combustion residue of released sulphur compounds. Further, tall oil is typically produced from removed black liquor soap. Typically, the efficiency of a recovery boiler is calculated by dividing the total energy output of a boiler by total energy input given to the boiler, multiplied by hundred.

The term "thermal liquefaction" refers to the process where a solid material is converted into liquid using elevated temperature. Among thermal liquefaction conversion methods, solvolysis, using an organic solvent and not water like in hydrothermal liquefaction, is the most widely used method due to relatively lower process temperature as compared to pyrolysis process or processes using subcritical or supercritical water. The main difference between pyrolysis and solvolysis techniques lies in what results from the biomass degradation; pyrolysis mainly produces gases and oils, and in solvolysis the organic products from biomass degradation are dissolved in the solvent in the absence of catalysts. Thus, solvolysis is a non-catalytic thermal liquefaction using an organic solvent. Typically, the solvolysis of the disclosure converts solid lignin into liquid biocrude having negligible metal content and which is deoxygenated from about 30 wt% oxygen content down to 15 wt%.

The term "non-catalytic" refers to a process where no heterogeneous or homogeneous catalyst is added to the process and where the reaction(s) take place in the absence of an added catalyst. Typically, this means in practice that the reaction(s) take place, only between the materials fed into the reactor(s) and the reagents formed during the reaction(s), without a catalyst.

According to the disclosure an integrated process for producing biocrude is provided, wherein the process comprises the following steps,

(a) providing black liquor from a kraft pulp mill, typically a kraft pulp mill,

(b) extracting a lignin feedstock from said black liquor,

(c) treating a feed mixture comprising said lignin feedstock or a lignin-based feedstock comprising said lignin feedstock in a thermal liquefaction step, typically a solvolysis step by heating the feed mixture at a temperature between 300 and 420 °C, and maintaining said temperature for 2 - 60 minutes at a pressure below 100 bar, preferably below 70 bar, more preferably below 35 bar, wherein the lignin-based feedstock typically contains 30 - 99 wt% lignin feedstock and 1 - 70 wt% sawdust, wherein the lignin feedstock comprises less than 10 wt% of, more preferably less than 5 wt% and most preferably less than 1 wt% of residues from the black liquor, and wherein the sawdust comprises 0.1 - 5 wt%, preferably 0.1 - 4 wt%, more preferably 0.1 - 2.5, most preferably 0.2 - 0.6 wt% ash and wherein the thermal liquefaction step typically is a non-catalytic solvolysis step using an organic solvent,

(d) obtaining a product mix and optionally separating a liquid product mix and an aqueous phase from said product mix,

(e) fractionating one or more fraction(s) from at least part of said product mix or part of said liquid product mix, at least a fraction having a boiling point above 500 °C at atmospheric pressure,

(f) recycling said fraction having a boiling point between above 500 °C at atmospheric pressure to a recovery boiler and/or lime kiln of said kraft pulp mill,

(g) recovering part of the product mix, part of the liquid product mix and/or one or more fractions or parts thereof.

The recovered part of the product mix, part of the liquid product mix and/or one or more fractions or parts thereof can be used as such as product(s), can be recycled in the integrated process and/or can be upgraded further.

The amount of lignin feedstock or lignin-based feedstock is typically 5 wt% to 35 wt% and the amount of solvent is typically 65 wt% to 95 wt%, together making up the feed mixture of the embodiments of the disclosure. Preferably the amount of lignin is 8 wt% to 25 wt%, more preferably 10 to 20 wt%, including the amount of lignin being between two of the following amounts; 5 wt%, 6 wt%, 7 wt%, 8 wt%, 9 wt%, 10 wt%, 15 wt%, 20 wt%, 25 wt%, 30 wt% and 35 wt% of the feed mixture and the rest is solvent. The solvent is typically chosen from renewable hydrocarbons, oxygen containing hydrocarbons and/or mixtures thereof. The renewable hydrocarbons or oxygen containing hydrocarbons preferably used as solvent can be from the process itself, typically a light fraction separated from the product mix or liquid product mix and/or for example crude tall oil, acid oil and/or vegetable oil. Suitable vegetable oil is for example Brassica carinata oil and/or Jatropha oil. Typically, at solvolysis conditions the added solvent will not react, so it can be sent back to solvolysis as part of the recycled product fraction.

According to an embodiment of the disclosure the optional pretreatment step of the process comprises preparing a feed mixture by mixing lignin feedstock or lignin-based feedstock with a solvent, for example a recycled product fraction produced by the process, at a temperature between 80 and 220 °C, at a pressure from 1 to 10 bar, for 5 - 60 min, including the temperature being a temperature between two of the following temperatures; 80 °C, 85 °C, 90 °C, 95 °C, 100 °C, 110 °C, 120 °C, 130 °C, 140 °C, 150 °C, 160 °C, 170 °C, 180 °C, 190 °C, 200 °C, 210 °C and 220 °C for the heating of the mixture at a pressure from 1 to 10 bar, preferably 1 to 5 bar, more preferably 1 to 3 bar. The reaction time, or the residence time in case this step is part of the continuous process, is typically 5 - 60 minutes, preferably 5-45 minutes, more preferably 5-30 minutes, most preferably 10 - 30 minutes not including the heating time. In the embodiments of the disclosure the pretreatment step can be carried out batch-wise or in continuously operated reactors. The mixing of the feedstock can be facilitated by mechanical treatment using different kind of mechanical equipment such as stirrer, pump etc, for example a piston pump. The obtained feed mixture is pumpable. During the mixing the lignin feedstock dissolves, at least partly, in the solvent. In some embodiments of the disclosure the pretreatment further comprises filtration and obtaining the feed mixture of solvent and lignin feedstock or lignin-based feedstock as the filtrate.

In embodiments of the disclosure, a feed mixture is, typically after an optional pretreatment step, directed to a thermal liquefaction step, typically a solvolysis step. The feed mixture is heated to a temperature between 300 °C and 420 °C and at this temperature the pressure typically increases up to between 1 bar (0.1 MPa) and 100 bar (10 MPa), between 1 bar (0.1 MPa) and 70 bar (7 MPa), more preferably between 1 bar (0.1 MPa) and 35 (3.5 MPa) bar. The reaction time, or the residence time in case this step is part of the continuous process, i.e. the time the temperature and pressure of the thermal liquefaction step, typically the solvolysis step, is maintained, is typically 2 - 60 minutes not including the heating time, preferably 5 - 40 minutes, more preferably 5 - 30 minutes, most preferably 10 - 30 minutes, including the time being between two of the following; 2, 3, 4, 5, 10, 15, 20, 25, 30, 36, 40, 45, 50, 55, 60 minutes, not including the heating time. More in detail the temperature of the thermal liquefaction step, typically the solvolysis step, is adjusted to a temperature selected from between 300 °C and 420 °C, preferably between 300 °C and 400 °C, more preferably between 360 °C and 400 °C, including the temperature being a temperature between two of the following temperatures; 300 °C, 310 °C, 320 °C, 330 °C, 340 °C, 350 °C, 360 °C, 370 °C, 380 °C, 390 °C, 400 °C, 410 °C and 420 °C for the heating of the feed mixture, optionally the feed mixture of the pretreatment step, wherein the pressure remains below or at 100 bar, preferably below 70 bar, more preferably below 35 bar, most preferably between 1 and 35 bar, including the pressure being between two of the following pressures; 1 bar, 2 bar, 5 bar, 10 bar, 15 bar, 20 bar, 25 bar, 30 bar, 35 bar, 40 bar, 45 bar, 50 bar, 55 bar, 60 bar, 70 bar, 80 bar, 90 bar and 100 bar. A product mix is obtained, and it is typically directed to a separation step, typically comprising washing and/or filtration, where solids/char is typically separated from the liquid product(s). Typically, if an aqueous phase is formed during the thermal liquefaction, typically solvolysis, it is optionally separated from the product before the product mix is processed further. The aqueous phase can be removed for example by decanting or as part of the washing. Water can be formed in the solvolysis due to deoxygenation reactions. Typically, the separated solids form a cake comprising oil. To increase the oil yield, this oil is optionally separated from the solids by washing or separating by steam.

The process of the embodiments of the disclosure, or parts thereof, can be a continuous, batch or semi-batch process.

According to embodiments of the disclosure the solvent used for starting up the process, before steady state is reached, is typically a commercial solvent product or hydrocarbon fraction product from another process. By time, this product is typically removed to be replaced by recycled product fraction(s) produced by the process. The removal of the solvent used for starting up the process is faster if the boiling point of the product used as solvent is lower than the boiling point of the recirculated fraction(s) used as solvent in steady state.

In the embodiments of the disclosure, the product mix or the liquid product mix of the disclosure comprising oil is subjected to fractionation step. A gaseous fraction, if any, one or more light and/or middle liquid fraction(s), and a heavy liquid fraction may be obtained. Further, a bottom residue fraction, typically comprising large molecules and solids, such as ash, and char may be separated.

In further embodiments of the disclosure, fraction(s) obtained by fractionation of the optionally washed and optionally filtered product mix or liquid product mix, preferably light and/or middle fraction(s), may be directed to a hydroprocessing step to obtain hydroprocessed oil, which can be used inter alia in production of chemicals, marine fuel and/or drop-in fuels such as diesel, naphtha, and jet-fuel.

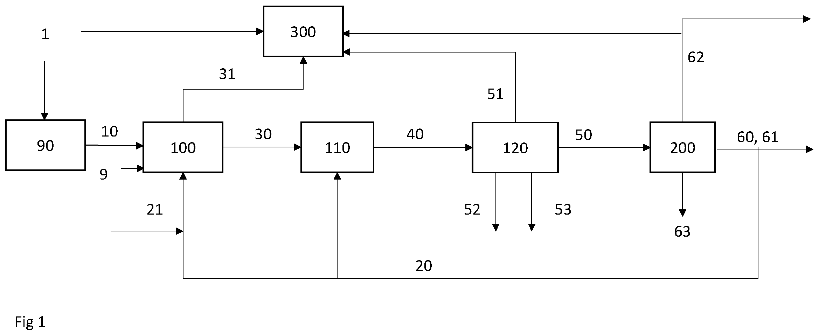

In Figure 1 lignin feedstock 10 obtained from black liquor 1 of a kraft pulp mill (not shown) by extraction 90 or lignin-based feedstock comprising lignin feedstock 10 and another renewable feedstock 9, preferably sawdust, is fed to an optional pretreatment step 100 together with a solvent 21, optionally a recycled product fraction 20. The mixture is optionally filtrated (not shown) and a feed mixture 30 of lignin and solvent is obtained and optionally solids 31 are removed. The feed mixture 30 is fed to a thermal liquefaction step, typically a solvolysis step 110 where it is heated. The product mix 40 obtained from the solvolysis step 110 is optionally directed to a separation step 120, typically comprising decanting, washing and/or filtration where an aqueous phase 53 and a liquid product mix 50 are separated, optionally gas 51 char/solids 52 are also separated. The liquid product mix 50 (or the product mix 40) is directed to fractionation 200 and/or optionally part of the liquid product mix 50 is directed to hydroprocessing, such as hydrotreatment or hydrocracking (not shown). The gaseous fraction 51 is optionally directed to the recovery boiler (300). The fractionation step 200 may for example be fractional distillation utilizing at least one fractionation step e.g., distillation column or evaporation. An optional gaseous fraction (not shown), a light fraction 60, a middle fraction 61, a fraction 62 having a boiling point over 500 °C at atmospheric pressure and an optional bottom residue fraction 63 are separated. Optionally the light fraction 60 or part thereof, the middle fraction 61 or part thereof and/or a fraction having a boiling point below 500 °C at atmospheric pressure or part thereof, are recirculated to be used as solvent in the pretreatment step 100 and/or solvolysis step 110. Optionally part of the light fraction 60 and/or part of the middle fraction 61, is directed to hydroprocessing. At least part of fraction 62 having a boiling point over 500 °C at atmospheric pressure is directed to a recovery boiler 300, optionally together with part of the black liquor 1 and/or undissolved solids 31 from the pretreatment 100. Part of the fraction, having a boiling point over 500 °C at atmospheric pressure, can also be directed to a lime kiln (not shown) and/or used in other applications (not shown) if the whole fraction is not recycled to the recovery boiler.

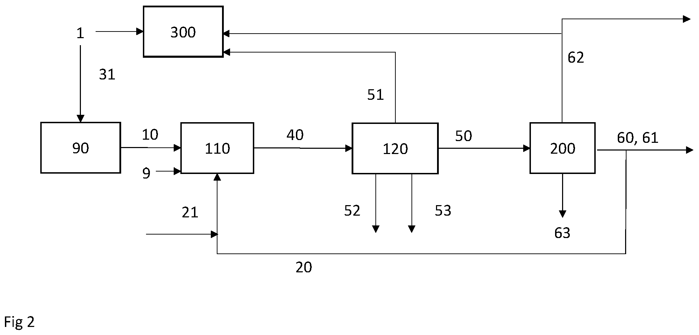

In Figure 2 lignin feedstock 10 obtained from black liquor 1 of a kraft pulp mill (not shown) by extraction 90 or lignin-based feedstock comprising lignin feedstock 10 and another renewable feedstock 9, preferably sawdust, is fed to a thermal liquefaction step, typically a solvolysis step 110 together with a solvent 21, optionally a recycled product fraction 20, where the feed mixture is heated. The product mix 40 obtained from the solvolysis step 110 is optionally directed to a separation step 120, typically comprising decanting, washing and/or filtration where an aqueous phase 53 and a liquid product mix 50 are separated, optionally gas 51 char/solids 52 are also separated. The liquid product mix 50 (or the product mix 40) is directed to fractionation 200 and/or optionally part of the liquid product mix 50 is directed to hydroprocessing, such as hydrotreatment or hydrocracking (not shown). The gaseous fraction 51 is optionally directed to the recovery boiler (300). The fractionation step 200 may for example be fractional distillation utilizing at least one fractionation step e.g., distillation column or evaporation. An optional gaseous fraction (not shown), a light fraction 60, a middle fraction 61, a fraction 62 having a boiling point over 500 °C at atmospheric pressure and an optional bottom residue fraction 63 are separated. Optionally the light fraction 60 or part thereof, the middle fraction 61 or part thereof and/or a fraction having a boiling point below 500 °C at atmospheric pressure or part thereof, are recirculated to be used as solvent in the pretreatment step 100 and/or solvolysis step 110. Optionally part of the light fraction 60 and/or part of the middle fraction 61, is directed to hydroprocessing. At least part of fraction 62 having a boiling point over 500 °C at atmospheric pressure is directed to a recovery boiler 300, optionally together with part of the black liquor 1 and/or undissolved solids 31 from the pretreatment 100. Part of the fraction, having a boiling point over 500 °C at atmospheric pressure, can also be directed to a lime kiln (not shown) and/or used in other applications (not shown) if the whole fraction is not recycled to the recovery boiler.

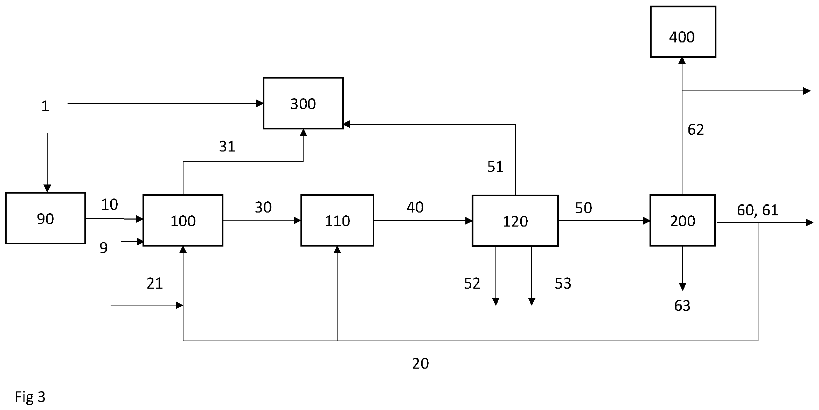

In Figure 3 lignin feedstock 10 obtained from black liquor 1 of a kraft pulp mill (not shown) by extraction 90 or lignin-based feedstock comprising the lignin feedstock 10 and another renewable feedstock 9, preferably sawdust, is fed to an optional pretreatment step 100 together with a solvent 21, optionally a recycled product fraction 20. The mixture is optionally filtrated (not shown) and a feed mixture 30 of lignin and solvent is obtained and optionally solids 31 are removed. The feed mixture 30 is fed to a thermal liquefaction step, typically a solvolysis step 110 where it is heated. The product mix 40 obtained from the solvolysis step 110 is optionally directed to a separation step 120, typically comprising decanting, washing and/or filtration where an aqueous phase 53 and a liquid product mix 50 are separated, optionally gas 51 char/solids 52 are also separated. The liquid product mix 50 (or the product mix 40) is directed to fractionation 200 and/or optionally part of the liquid product mix 50 is directed to hydroprocessing, such as hydrotreatment or hydrocracking (not shown). The gaseous fraction 51 is optionally directed to the recovery boiler (300). The fractionation step 200 may for example be fractional distillation utilizing at least one fractionation step e.g., distillation column or evaporation. An optional gaseous fraction (not shown), a light fraction 60, a middle fraction 61, a fraction having a boiling point over 500 °C at atmospheric pressure 62 and an optional bottom residue fraction 63 are separated. Optionally the light fraction 60 or part thereof, the middle fraction 61 or part thereof and/or a fraction having a boiling point below 500 °C at atmospheric pressure or part thereof, are recirculated to be used as solvent in the pretreatment step 100 and/or solvolysis step 110. Optionally part of the light fraction 60 and/or part of the middle fraction 61, is directed to hydroprocessing. At least part of the fraction having a boiling point over 500 °C at atmospheric pressure 62 is directed to a lime kiln 400. Part of the fraction, having a boiling point over 500 °C at atmospheric pressure, can also be directed to the recovery boiler 300 (not shown) and/or used in other applications (not shown).

In embodiments of the disclosure, part of the product mix, part of the liquid product mix or fraction(s) obtained by fractionation of the optionally washed and optionally filtered product mix may be used as a renewable product as such, for example in the production of chemicals, in marine fuel applications or applications relating to heating or may be directed to a hydroprocessing step. At least part of a separated fraction having a boiling point above 500 °C at atmospheric pressure is directed to the recovery boiler and/or lime kiln of the kraft pulp mill. Part of the product mix, part of the liquid product mix or other fraction(s) obtained by fractionation of the optionally washed and optionally filtered product mix may also be recycled in the process or upgraded further. Especially light and/or middle fraction(s), are typically directed to a hydroprocessing step to obtain hydroprocessed oil, which can be used inter alia in production of chemicals, marine fuel and/or drop-in fuels such as diesel, naphtha, and jet-fuel. Undissolved solids from the pretreatment can be directed to the recovery boiler and part of the fraction, having a boiling point over 500 °C at atmospheric pressure, can also be directed to both the recovery boiler and the lime kiln and/or be used in other applications.

## Lignin

The lignin feedstock of the embodiments of the disclosure is obtained from kraft lignin obtained from kraft pulping in a kraft pulp mill.

Typically, the kraft lignin essentially consists of lignin, i.e. the feedstock is substantially free of impurities such as metals as part of ash and/or or residues from black liquor, such as cellulose, hemicellulose, methanol, and cooking chemicals from the kraft process, preferably the lignin feedstock comprises below 10 wt%, preferably the lignin comprises below 5 wt% % and more preferably below 1 wt%%, most preferably below 0.1 wt% of residues from the black liquor. Preferably the lignin is cellulose-free.

The kraft process (also known as kraft pulping or sulfate process) is a process for conversion of wood into wood pulp, which consists of almost pure cellulose fibers, the main component of paper. The process involves the conversion of wood to pulp using an aqueous mixture containing sodium hydroxide and sodium sulphide. These chemicals remove the lignin links between cellulose fibres, thereby releasing the fibres and producing water-soluble compounds. The kraft pulping process is well-known and it is known that it removes most of the lignin originally present in the wood. The liquid separated from pulp is commonly referred to as "crude black liquor" or "weak black liquor". The term "black liquor" refers to the aqueous liquid residue of the kraft pulping process which has been separated from solid wood pulp (cellulose fibres). The black liquor contains dissolved wood degradation products such as lignin and hemicellulose fragments, as well as methanol, sulphur compounds and dissolved inorganic solids such as spent pulping chemicals. The methanol content is typically in the range of 0.5-1.5 wt.% based on the mass of dry solids.

Sulphur compounds are typically contained in the black liquor in an amount of 2-7 wt.% based on the mass of dry solids.

An acidification process has been considered as an efficient and economical process for the isolation of lignin from black liquor. One example of black liquor acidification for lignin extraction is adding acid e.g., sulfuric acid to change the pH of black liquor. Other typical processes for obtaining lignin from black liquor are using filtration and ultrafiltration.

A typical lignin feedstock of the embodiments of the disclosure is a composition comprising 15-98 wt% organics, 0.1 - 15 wt% ash and/or 0-45 wt% moisture. Typically, the oxygen content of the composition is below 40 wt%, preferably from 20 to 36 wt%, most preferably from 25 - 36 wt% daf (dry-ash-free, i.e. without taking into account possible ash and moisture content). In preferred embodiments of the disclosure; the amount of organics is 30 - 98 wt%, more preferably 30 - 70 wt%, most preferably 50 - 70 wt%; the amount of ash is 0.1 - 7 wt%, more preferably 0.1 - 3 wt%, most preferably 0.1 - 1 wt%, including the ash content being between two of the following values; 0.1 wt%, 0.2 wt%, 0.3 wt%, 0.4 wt%, 0.5 wt%, 1 wt%, 1.5 wt%, 2 wt%, 2.5 wt%, 3 wt%, 3.5 wt%, 4 wt%, 5 wt%, 6 wt%, 7 wt%, 8 wt%, 9 wt%, 10 wt%, 11 wt%, 12 wt%, 13 wt%, 14 wt% and 15 wt%; and/or the amount of moisture is preferably 0 - 35 wt%, more preferably 0 - 20 wt%, most preferably 0 - 5 wt% including the amount of moisture being between two of the following values; 0 wt%, 0.1 wt%, 0.2 wt%, 0.3 wt%, 0.4 wt%, 0.5 wt%, 1 wt%, 2 wt%, 5 wt%, 10 wt%, 15 wt%, 20 wt%, 25 wt%, 30 wt%, 35 wt%, 40 wt% and 45 wt%.. If needed, the lignin feedstock can be dried.

In some embodiments of the disclosure the lignin feedstock can be chosen based on its molecular weight and optionally also its polydispersity. Typically, the lignin feedstock is fraction(s) of lignin, obtained by filtration, nanofiltration, acid precipitation process or membrane fractionation. Lignin can be subjected to gradient acid precipitation to obtain lignin fractions with narrow molecular weight distribution. During gradient acid precipitation lignin fractions obtained at higher pH value exhibit higher molecular weight compared with the fractions obtained at lower pH. The fractionation can also be achieved by dissolving lignin in solvent used in the solvolysis, followed by filtration where after a feed mixture of a lignin fraction and solvent is obtained as the filtrate. Since small particles have larger surface area they dissolve better and a fraction of lignin with a lower molecular weight is obtained as filtrate.

In some embodiments of the disclosure, the average molecular weight of the lignin feedstock is below 6500 g/mol, preferably below 4000 g/mol, more preferably below 2000 g/mol, most preferably below 1500 g/mol. Typically, the polydispersity of the lignin feedstock is 1.2 to 6, preferably 1.2 to 4.5, more preferably 1.2 to 2.5.

The molecular weight distribution can for example be determined using Gel Permeation Chromatography (GPC). GPC is an analytical technique that separates dissolved macromolecules by size based on their elution from columns filled with a porous gel. GPC/SEC employs a stagnant liquid present in the pores of beads as the stationary phase, and a flowing liquid as the mobile phase. The mobile phase can therefore flow between the beads and also in and out of the pores in the beads. The separation mechanism is based on the size of the polymer molecules in solution. Bigger molecules will elute first. Small molecules that can enter many pores in the beads take a long time to pass through the column and therefore exit the column slowly. To determine the molecular weights of the components of a polymer sample, a calibration with standard polymers of known weight must be performed. Values from the unknown sample are then compared with the calibration graph. This method is relative and retention times depends on the used column material, eluent and how similar the used standards are compared to the samples.

**Forest industry residues**

The forest industry residues of the embodiments of the disclosure are typically residues from forest industry such as bark, sawdust, wood chips, other wood residues or a combination thereof. The forest industry residues are typically produced at an industry area, such as sawdust by timber industry or de-barking at pulp industry.

In some embodiments of the disclosure, the solid forest industry residues are solid forest residues such as cutting residues, for example branches and treetops.

Typically, the solid second renewable feedstock is solid forest industry residues, including solid forest residues, preferably the solid second renewable feedstock is bark, sawdust, wood chips, branches, treetops, or mixtures thereof, more preferably bark, sawdust, wood chips or mixtures thereof.

Typical compositions of sawdust, bark and forest residues of the embodiments of the disclosure are shown in Table 1.

Table 1. Composition of different forest industry residues by weight.

| Description | Unit | Method | Spruce sawdust | Pine sawdust | Spruce bark | Pine bark | Forest residue |
|---|---|---|---|---|---|---|---|
| Dry content 105°C | % | Internal | 46.2 | 45.9 | 55.8 | 42.2 | 42 |
| Carbon, C | % | ASTM D5291 | 49.40 | 49.93 | 49.50 | 54.10 | 47.2 |
| Hydrogen, H | % | ASTM D5291 | 6.34 | 6.36 | 5.93 | 5.57 | 5.4 |
| Nitrogen, N | % | ASTM D5291 | 0.10 | 0.08 | 0.27 | 0.23 | 0,7 |
| Sulphur, S | % | ASTM D4239 | 0.00 | 0.00 | 0.02 | 0.02 | 0.005 |
| Oxygen, O | % | ASTM D5291 | 43.31 | 43.01 | 41.90 | 38.00 | 46,65 |
| Ash 550°C | % | SFS-EN 14775 | 0.3 | 0.2 | 2.4 | 2.1 | 3.5 |

Typically, the ash content of the solid forest industry residue is 0.1 - 5 wt%, preferably 0.1 - 4 wt%, more preferably 0.1 - 2.5, most preferably 0.2 - 0.6 wt%, including the ash content being between two of the following values; 0.1 wt%, 0.2 wt%, 0.3 wt%, 0.4 wt%, 0.5 wt%, 0.6 wt%, 1 wt%, 1.5 wt%, 2 wt%, 2.5 wt%, 3 wt%, 3.5 wt%, 4 wt% and 5 wt%. Typically, the ash content of sawdust used the solid forest industry residue is 0.1 - 5 wt%, preferably 0.1 - 4 wt%, more preferably 0.1 - 2.5, most preferably 0.2 - 0.6 wt%, including the ash content being between two of the following values; 0.1 wt%, 0.2 wt%, 0.3 wt%, 0.4 wt%, 0.5 wt%, 0.6 wt%, 1 wt%, 1.5 wt%, 2 wt%, 2.5 wt%, 3 wt%, 3.5 wt%, 4 wt% and 5 wt%.

The solid forest industry residue is typically dried to a moisture content below 20 wt%, preferably below 15 wt%, more preferably between 10 wt% and 20 wt% and most preferably between 10 wt% and 15 wt% before it is entered into the process of the disclosure.

**Fractionation of the product mix**

The obtained product mix is fractionated in a fractionation step before being used as a renewable product and recirculated in the process itself, for example as recycled product fraction. A gaseous fraction, if any, one or more light and/or middle fraction(s) and a fraction having a boiling point over 500 °C at atmospheric pressure as well as a bottom residue fraction comprising solids, if any, may be obtained. At least part of the fraction(s) having a boiling point over 500 °C at atmospheric pressure is recirculated, i.e. used as an energy source in a recovery boiler and/or lime kiln of the kraft pulp mill. The gaseous fraction from the solvolysis process typically comprises water, carbon dioxide and light gaseous ($C_1$-$C_4$) compounds and is optionally directed to a recovery boiler, a bark boiler and/or a odorous gas boiler. Typically, the recovery boiler, bark boiler and/or odorous gas boiler is connected to or part of the kraft pulp mill of the integrated process.

The vacuum residue of the product mix is typically above 10 wt.%. The fractionation may be carried out after washing, filtering and/or drying the product mix, i.e. after obtaining a liquid product mix and an aqueous phase. The aqueous phase is typically directed to a wastewater treatment plant (WWTP), typically a WWTP in connection with the kraft pulp mill. A typical kraft pulp mill wastewater treatment includes primary treatment (neutralization, screening or sedimentation), principally to remove suspended solids, and biological/secondary treatment and secondary treatment mainly to diminish the organic matter, which is removed by biological degradation. Some mills have tertiary treatment to further reduce toxicity, suspended solids, organics or colour.

In an embodiment, part of the liquid product mix may be directed to a hydroprocessing step without fractionation.

In embodiments of the disclosure, one of the fractions, typically a light or middle fraction, obtained by fractionation of said product mix or liquid product mix, may be directed to a hydroprocessing step and part of the fraction(s) are used as solvent in the feed mixture and/or in the pretreatment step of the process.

The fractionation may be carried out as evaporation, distillation, extraction, ultra-filtration, nanofiltration or as a combination of any of these.

Fractions comprising the gaseous fraction, the light and/or middle liquid fraction(s) and the heavy liquid fraction can be separated. A person skilled in the art is able to vary the fractionation/distilling conditions and to change the temperature cut point as desired to obtain any desired fraction, boiling in the predetermined ranges or corresponding to these fractions.

Alternatively, a combination of different methods may also be used.

**Optional hydroprocessing step**

In the embodiments of the disclosure, part of the product mix, part of the liquid product mix, a light fraction or middle fraction obtained for example by fractionation of the product mix or liquid product mix, and/or any other fraction of the product mix, may be subjected to a catalytic hydroprocessing step carried out in the presence of hydrogen. Gasoline fractions that can be used as a bio-naphtha component or as raw material for bioplastics may also be produced.

The hydroprocessing step may be carried out for effecting at least one of hydrodeoxygenation, hydrodewaxing, hydroisomerization, hydrocracking, hydrodearomatization and ring opening reactions.

Hydroprocessing, such as hydrotreatment or hydrocracking may be performed using one or more hydroprocessing catalysts comprising one or more metals selected from Group VIA and Group VIII metals (Periodic Table of Elements). Particularly useful examples are Mo, W, Co, Ni, Pt and Pd. The catalyst(s) can also contain one or more support materials, for example zeolite, alumina ($Al_2O_3$), gamma-alumina, zeolite-alumina, alumina-silica ($SiO_2$), $ZrO_2$, alumina-silica-zeolite and activated carbon. Suitably a mixture of CoO and $MoO_3$ (CoMo) and/or a mixture of NiO and $MoO_3$ (NiMo), and/or a mixture of Ni, Mo and Co and/or NiW and one or more support materials selected from zeolite, alumina, silica, zeolite-alumina, alumina-silica, alumina-silica-zeolite and activated carbon. Also, noble metals, such as Pt and/or Pd dispersed on gamma-alumina may be used.

In an embodiment, the hydroprocessing is carried out under a pressure of 5 - 300 bar (total pressure, abs). In an embodiment, the pressure in the hydroprocessing is from 30 to 250 bar, suitably from 30 to 120 bar.

In an embodiment, hydrogen partial pressure is maintained in the range from 50 to 250 bar, suitably from 80 to 200 bar, particularly suitably from 80 to 110 bar.

The hydroprocessing is carried out at a temperature in the range of 100 to 450°C, suitably 280°C to 450°C, more suitably from 350°C to 400°C.

The hydroprocessing feed rate WHSV (weight hourly spatial velocity) of the feedstock oil is proportional to an amount of the catalyst. The WHSV of the feed material varies between 0.1 and 10, it is suitably in the range of 0.1- 5 and preferably in the range of 0.3 - 0.7.

The ratio of H2/feed varies between 600 and 4000 Nl/l, suitably of 1300-2200 Nl/l.

The feed is pumped to the hydroprocessing reactor at a desired speed. Suitably the feed rate LHSV (liquid hourly space velocity) of the feed material is in the range of 0.01-10 h-1, suitably 0.1- 5 h-1.

The hydroprocessing step may be carried out as at least one-step process or as at least two-step process.

The liquid hydrocarbon stream obtained from the hydroprocessing includes fuel grade hydrocarbons having a boiling point of at most 380°C according to ISO EN 3405.The person skilled in the art is able to vary the distilling conditions and to change the temperature cut point as desired to obtain any suitable hydrocarbon product, boiling suitably in the transportation fuel ranges.

EXAMPLES

**Analysis methods used in the examples**

The elemental composition of the liquid and solids was determined with an Interscience Flash 2000 elemental analyser. The water content of the aqueous phase was determined by Karl Fischer titrations using Hydranal composite 5, Metrohm 787 KFTitrino as titrant.

The contents of ash, volatile matter, moisture and fixed carbon in the lignin (proximate analysis) were determined by measuring weight loss upon heating. These constituents will add up to 100%. Ash content determination was performed by heating a lignin sample in air at a slow heating rate (5°C/min). Once the temperature reached 550 °C it was kept constant for 6 hours before the sample was weighted. The remaining weights measured at 520 °C represent the ash contents at these temperatures.

The combined content of fixed carbon and volatiles was determined by slowly heating a lignin sample (5 °C/min) in nitrogen to 950 °C where it was maintained for 10 minutes before it was weighted. The measured weight loss represents the combined content of water and volatiles. The remaining weight represents the content of fixed carbon.

The moisture content of the lignin was determined by a PMB-53 moisture analyzer of Adam Equipment.

**Calculations of mass balance and yields**

The mass balance distinguishes four different product phases - oil (o), aqueous phase (aq), gas (g) and solids (s). The produced amounts of each phase are determined as follows:

1. Oil - is the liquid phase collected after the experiment.
2. Aqueous phase organics (water soluble organics - WSO) remain in the oil phase. Only when 20 wt% of water was used in the slurry mixture of lignin and lights, a separate water layer was observed which contained almost no organics molecules.

3. Gas - From the known volume of produced gas and GC composition, the weight of total gas is calculated and the amount of measured N2 is subtracted. The known volume of produced gas and the average molar weight of 33 g/mol are used calculate the amount of gas produced. Nitrogen is subtracted based on the initial pressure and the approximate initial volume taken up by gas phase in the reactor at the start of an experiment.

4. Solids (char) - The amount of solids is determined directly by weighing dried solids when withdrawn from the oven.

Since all yields are given on dry lignin basis, the amount of dry lignin fed in the reactor is corrected for initial lignin moisture as follows:

$$m_{lignin,dry} = m_{lignin} \cdot (1 - w_{moisture,lignin}) \qquad (Eq.4)$$

The gas and solid yields are calculated by:

$$Y_{product} = \frac{m_{product}}{m_{lignin,dry}} \qquad (Eq.5)$$

$Y_S$ is used for the solids and $Y_G$ for the gas. The oil yield is calculated as 100 minus gas and char. When the yields are expressed on the lignin intake, all solids and gas are first ascribed to the lignin after that, the amount of gas produced from the lights only are subtracted from the gas production from the lignin. The oil yield from lignin follows from 100 minus gas and solids from lignin.

Example 1A. Preparing feed mixture of lignin feedstock

Black liquor was obtained from a kraft pulp mill. A lignin feedstock with 35 wt% moisture content was obtained by extraction from the black liquor of the kraft pulp mill. The lignin feedstock was dried to a moisture content below 1 wt%. 15 kg of the dried lignin feedstock of Table 2 (15 wt% based on the dry weight), and 85 kg of cresol, used as solvent were mixed.

The mixture was placed in reactor vessels and heated to a temperature of 180 ºC. The mix was mixed for 60 minutes, and the obtained feed mixture was used as pumpable feedstock for the continuous solvolysis plant.

Table 2. Kraft lignin composition of dried lignin feedstock

| Ash, wt% | < 1 |
|---|---|
| Organics, wt% | 99 |
| Moisture, wt% | < 1 |
| Molecular weight Mw, g/mol | 3406 |

Example 1B. Preparing feed mixture of lignin-based feedstock with sawdust

Black liquor was obtained from a kraft pulp mill. A lignin feedstock with 35 wt% moisture content was obtained by extraction from the black liquor of the kraft pulp mill. The lignin feedstock was dried to a moisture content below 1 wt%. 7.5 kg of the dried lignin feedstock of Table 2.5 kg of 2-3 mm pine sawdust and 87.5 kg of cresol, used as solvent, were mixed.

The mixture was placed in reactor vessels and heated to a temperature of 180 ºC. The mix was mixed for 60 minutes, and the obtained feed mixture was used as pumpable feedstock for the continuous solvolysis plant. Solids (undissolved material) are optionally directed to the recovery boiler.

Example 2A. Continuous thermal liquefaction step

The feed mixture obtained in Example 1A was used for continuous solvolysis. The reactor temperature was 380 °C and the reaction time was 10 minutes (at set-point). The feeding rate was 5-10 kg/hr and the pressure was constant between 40 and 45 bar. The cooling temperature of the product vessel was 30 °C.

The solvolysis yield was a liquid biocrude having negligible metal content and which was deoxygenated from ca. 30 wt% oxygen content in the lignin feedstock, down to 15 wt% in the biocrude. The solvolysis effluent was 90 wt% of the lignin feed and 10 wt% was mainly gas and negligible amount of aqueous phase.

Example 2B. Continuous thermal liquefaction step

The feed mixture obtained in Example 1B was used for continuous solvolysis at the same site where the kraft pulp mill is. The reactor temperature was 380 °C and the reaction time was 10 minutes (at set-point). The feeding rate was 5-10 kg/hr and the pressure was constant between 40 and 45 bar. The cooling temperature of the product vessel was 30 °C.
The solvolysis yield was a liquid biocrude having negligible metal content and lower oxygen content than the lignin feedstock

Example 3. Fractionation of the solvolysis crude

The solvolysis crude, the oil yield obtained according to Example 2A, was fractionated using vacuum distillation. The fraction obtained were the following ones

- A volatile fraction that boiled at a temperature below 120 °C at 1000 mbara. The unit most frequently used for in vacuum technology is millibar (mbar) and absolute vacuum is 0 mbar. This fraction had a molecular weight distribution range from 18 to 100 g/mol.
- A distillation fraction that had an average molecular weight of approximately 50 - 200 g/mol. The boiling point of the distillation fraction was 150 to 260 °C at atmospheric pressure.
- A distillation fraction having a boiling point between 260 and 500 °C at atmospheric pressure. This distillation fraction was solid at room conditions but become liquid at about 80 °C. It had a molecular weight between 150 g/mol and 500 g/mol.
- A distillation fraction obtained in the distillation process at temperatures higher than 500 °C had an average molecular weight of above 450 g/mol and was liquid at about 280 - 350 °C.

The fraction having a boiling point over 500 °C at atmospheric pressure was 20-35% of the feed to the solvolysis process. The properties of the fraction having a boiling point over 500 °C at atmospheric pressure are shown in Table 3.

Table 3. Properties of the fraction having a boiling point over 500 °C at atmospheric pressure

|  |  |  | Fraction |
|---|---|---|---|
| Dry content 105°C | % | Internal | 99,7 |
| ICP metals with ashing |  |  |  |
| Aluminium, Al, ICP | mg/kg | SFS-EN ISO 11885 | 25,3 |
| Barium, Ba, ICP | mg/kg | SFS-EN ISO 11885 | 11,9 |
| Calcium, Ca, ICP | mg/kg | SFS-EN ISO 11885 | 46,4 |
| Copper, Cu, ICP | mg/kg | SFS-EN ISO 11885 | 3,58 |
| Iron, Fe, ICP | mg/kg | SFS-EN ISO 11885 | 26,6 |
| Potassium, K, ICP | mg/kg | SFS-EN ISO 11885 | 250 |
| Magnesium, Mg, ICP | mg/kg | SFS-EN ISO 11885 | 86,8 |
| Manganese, Mn, ICP | mg/kg | SFS-EN ISO 11885 | 21,8 |
| Sodium, Na, ICP | mg/kg | SFS-EN ISO 11885 | 3277 |
| Phosphorus, P, ICP | mg/kg | SFS-EN ISO 11885 | 6,57 |
| Sulphur, S, ICP | mg/kg | SFS-EN ISO 11885 | 2623 |
| Silicon, Si, ICP | mg/kg | SFS-EN ISO 11885 | 13 |
| Carbon, C (Flash) | % | ASTM D5291 | 73,78 |
| Hydrogen, H (Flash) | % | ASTM D5291 | 4,94 |
| Nitrogen, N (Flash) | % | ASTM D5291 | 0,05 |
| Sulphur, S (Flash) | % |  | 0,36 |
| Oxygen, O | % |  | 17,67 |
| Gross calorific value | MJ/kg | DIN 51900-1, EN 14918 | 30,4 |

(continued)

| | | | Fraction |
|---|---|---|---|
| Net Calorific value | MJ/kg | EN 14918 | 29,35 |
| Net calorific value as received | MJ/kg | EN 14918 | 29,25 |
| Moisture content, 105°C | % | SFS-EN 14774-2 | 0,3 |
| Ash 550°C | % | SFS-EN 14775 | 1,3 |

The characterization of the fraction having a boiling point over 500 °C at atmospheric pressure demonstrated that its oxygen content is lower than the starting material, it is almost moisture free and has low ash content. These properties make it a good biofuel that can replace fossil fuels in several applications.

Corresponding fractions are obtained if the solvolysis crude obtained according to Example 2B, is fractionated for example using vacuum distillation or evaporation.

Example 4. Utilizing the fraction having a boiling point over 500 °C at atmospheric pressure in the kraft pulp mill recovery boiler

The fraction having a boiling point over 500 °C at atmospheric pressure obtained according to Example 3 and Table 3, is directed to the recovery boiler of the kraft pulp mill to compensate for the removed black liquor as an energy source in the recovery boiler. Optionally also undissolved solids from the pretreatment are directed to the recovery boiler according to Figure 1.

In the recovery boiler the metals present in the recycled fraction having a boiling point over 500 °C at atmospheric pressure are fully recovered. The introduction of the recycled fraction having a high calorific value to the recovery boiler, enables extraction of larger amounts of lignin. The lignin extraction can be enhanced up to 50%, without influencing the recovery of the cooking chemicals and/or the incineration capacity of the recovery boiler.

As no additional chemicals are used in the solvolysis process, no extra non-process elements (NPEs) will be added to the recovery cycle.

Example 5. Utilizing the fraction having a boiling point over 500 °C at atmospheric pressure in the kraft pulp mill lime kiln

The fraction having a boiling point over 500 °C at atmospheric pressure obtained according to Example 3 and Table 3, is directed to the lime kiln of the kraft pulp mill according to Figure 3 as fuel to replace exciting fuels, especially fossil fuels.

The high heating value of the recycled fraction having a boiling point over 500 °C at atmospheric pressure makes it a good fuel with high adiabatic flame temperature and it is used to replace lime kiln fuel demand. As no additional chemicals are used in the solvolysis process, no extra non-process elements (NPEs) will be added to the recovery cycle.

**Claims**

1. An integrated process for producing biocrude, **characterized in that** the process comprises the following steps,

(a) providing black liquor (1) from a kraft pulp mill,
(b) extracting (90) a lignin feedstock (10) from said black liquor (1),
(c) treating a feed mixture (30) comprising lignin feedstock (10) or lignin-based feedstock (9, 10) in a solvolysis step (110) by heating the feed mixture (30) at a temperature between 300 and 420 °C, and maintaining said temperature for 2 - 60 minutes at a pressure below 100 bar, preferably below 70 bar, more preferably below 35 bar,
(d) obtaining a product mix (40) and optionally separating (120) a liquid product mix (50) and an aqueous phase (53) from said product mix (40),
(e) fractionating (200) one or more fraction(s) (53, 60, 61, 62) from at least part of said product mix (40) or from at least part of said liquid product mix (50), at least a fraction having a boiling point above 500 °C at atmospheric pressure (62),
(f) recycling said fraction having a boiling point above 500 °C at atmospheric pressure (62) to a recovery boiler (300) of said kraft pulp mill and/or to lime kiln (400) of said kraft pulp mill, and
(g) recovering part of the product mix (40); part of the liquid product mix (50); and/or one or more fractions (60, 61, 62) or parts thereof.

2. The integrated process for producing biocrude according to claim 1, **characterized in that** the lignin-based feedstock comprises 30 - 99 wt% lignin feedstock (10) and 1 - 70 wt% other renewable feedstock (9), preferably solid forest industry residues, more preferably bark, sawdust, wood chips, branches, treetops or mixtures thereof, most preferably sawdust.

3. The integrated process for producing biocrude according to any of the preceding claims, **characterized in that** the process further comprises preparing the feed mixture (30) by mixing (100) lignin feedstock (10) or lignin-based feedstock (9, 10) with solvent, preferably a recycled product fraction (60, 61), at a temperature between 80 and 220 °C, at a pressure from 1 bar to 10 bar, for 5 - 60 min.

4. The integrated process for producing biocrude according to claim 3, **characterized in that** the process further comprises filtration and obtaining the feed mixture of lignin feedstock or lignin-based feedstock, and solvent as the filtrate.

5. The integrated process according to any one of the preceding claims, **characterized in that** the amount of lignin feedstock (10) or lignin-based feedstock (9, 10) is 5 wt% to 35 wt%, preferably the 8 wt% to 25 wt%, more preferably 10 to 20 wt% of the feed mixture (30) and the rest is solvent (21), preferably recycled product fraction (20).

6. The integrated process for producing biocrude according to any of the preceding claims, **characterized in that** the lignin feedstock (10) comprises less than 10 wt% of, more preferably less than 5 wt% and most preferably less than 1 wt% of residues from the black liquor (1).

7. The integrated process for producing biocrude according to any of the preceding claims, **characterized in that** the lignin feedstock (10) comprises below 40 wt%, preferably from 20 to 36 wt%, most preferably from 25 - 36 wt% oxygen daf (dry-ash-free).

8. The integrated process for producing biocrude according to any of the preceding claims, **characterized in that** the lignin feedstock (10) comprises 15-98 wt%, preferably 30 - 98 wt%, more preferably 30 - 70 wt%, most preferably 50 - 70 wt% organics, 0.1 - 15 wt%, preferably 0.1 - 7 wt%, more preferably 0.1 - 2 wt%, most preferably 0.1 - 1 wt% ash and/or 0 - 20 wt%, preferably 0 - 10 wt%, more preferably 0 - 5 wt% moisture.

9. The integrated process for producing biocrude according to any of the preceding claims, **characterized in that** the solid forest industry residue, comprises 0.1 - 5 wt%, preferably 0.1 - 4 wt%, more preferably 0.1 - 2.5, most preferably 0.2 - 0.6 wt% ash.

10. The integrated process for producing biocrude according to any of the preceding claims, **characterized in that** the lignin-based feedstock comprises 30 - 99 wt% lignin feedstock (10), wherein the lignin feedstock comprises less than 10 wt% of, more preferably less than 5 wt% and most preferably less than 1 wt% of residues from the black liquor (1), and 1 - 70 wt% sawdust, wherein the sawdust comprises 0.1 - 5 wt%, preferably 0.1 - 4 wt%, more preferably 0.1 - 2.5, most preferably 0.2-0.6 wt% ash.

11. The integrated process for producing biocrude according to any of the preceding claims, **characterized in that** the lignin feedstock (10) has a molecular weight below 6500 g/mol, preferably below 4500 g/mol, more preferably below 3500 g/mol, most preferably below 2000 g/mol or below 1500 g/mol.

12. The integrated process for producing biocrude according to any of the preceding claims, **characterized in that** the process is a continuous, batch or semi-batch process.

13. The integrated process according to any one of the preceding claims, **characterized in that in that** at least part of the fraction(s) (60, 61) from said fractionation (200) is directed to a hydroprocessing step.

14. The integrated process for producing biocrude according to any of the preceding claims, **characterized in that** the aqueous phase (53) is directed to a wastewater treatment plant of the kraft pulp mill.

15. The integrated process for producing biocrude according to any of the preceding claims, **characterized in that** separating (120) a liquid product mix (50) and an aqueous phase (53) from said product mix (40) further comprises separating a gaseous fraction (51) and directing the gaseous fraction to recovery boiler (300), a bark boiler and/or a odorous gas boiler of the kraft pulp mill.

16. The integrated process for producing biocrude according to any of the preceding claims, **characterized in that** part of the fraction (62), having a boiling point above 500 °C at atmospheric pressure, is directed to both the recovery boiler and lime kiln of the kraft pulp mill.

17. The integrated process for producing biocrude according to any of the preceding claims, **characterized in that** the heating of the solvolysis step (110) is performed by means of the integrated process, preferably by using steam and/or electricity from the recovery boiler (330).

18. Use of the integrated process according to any of claims 1 - 17 for controlling incineration capacity of the recovery boiler (300).

19. Use of a fraction having a boiling point above 500 °C at atmospheric pressure (62), obtained from thermal liquefaction of a lignin feedstock (10) or lignin-based feedstock (9, 10), in a recovery boiler (300) and/or lime kiln (400) of a kraft pulp mill.

20. Use of a fraction according to claim 19, wherein the fraction having a boiling point above 500 °C at atmospheric pressure (62) is obtained according to the integrated process of any of claims 1-17 and is used in the recovery boiler (300) and/or lime kiln (400) of the kraft pulp mill of said integrated process.

21. Use of steam and/or electricity from the recovery boiler (330) of the kraft pulp mill of the integrated process according to any of claims 1 - 17 for heating of the solvolysis step (110) of the integrated process according to any of claims 1-17.

Fig 1

Fig 2

Fig 3

Europäisches
Patentamt

European
Patent Office

Office européen
des brevets

# EUROPEAN SEARCH REPORT

**Application Number**

EP 24 18 1682

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/130752 A1 (STIGSSON LARS [SE] ET AL) 12 May 2016 (2016-05-12) * paragraphs [0007], [0048], [0050], [0052], [0087]; claims 50,53,57,61,62 * | 1-20 | INV. C10G1/00 C10G1/02 C10G1/04 C10G45/00 |
| X | US 2013/232852 A1 (PETERSON JOHN R [US] ET AL) 12 September 2013 (2013-09-12) * paragraphs [0012], [0126] - paragraphs [0127], [0133], [0144], [0206], [0214]; claims 1,4,5,12,13,16,17 * | 1-21 | C10G3/00 C10G49/26 |
| X | US 2018/265794 A1 (DAHLSTRAND CHRISTIAN [SE] ET AL) 20 September 2018 (2018-09-20) * paragraph [0007] * | 19,20 | |

----- | | |

**TECHNICAL FIELDS SEARCHED (IPC)**

C10G

The present search report has been drawn up for all claims

| Place of search | Date of completion of the search | Examiner |
|---|---|---|
| The Hague | 24 October 2024 | Deurinck, Patricia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

**EP 4 481 015 A1**

## ANNEX TO THE EUROPEAN SEARCH REPORT
## ON EUROPEAN PATENT APPLICATION NO.

EP 24 18 1682

24-10-2024

| Patent document cited in search report | Publication date | Patent family member(s) | Publication date |
|---|---|---|---|
| US 2016130752 A1 | 12-05-2016 | BR 112015029859 A2 | 25-07-2017 |
| | | CA 2913852 A1 | 04-12-2014 |
| | | EP 3004455 A1 | 13-04-2016 |
| | | SE 1550117 A1 | 04-02-2015 |
| | | SE 1550127 A1 | 05-02-2015 |
| | | SE 1551720 A1 | 29-12-2015 |
| | | SE 1751100 A1 | 11-09-2017 |
| | | US 2016130752 A1 | 12-05-2016 |
| | | WO 2014193289 A1 | 04-12-2014 |
| US 2013232852 A1 | 12-09-2013 | US 2013232852 A1 | 12-09-2013 |
| | | US 2015073131 A1 | 12-03-2015 |
| | | WO 2013134754 A1 | 12-09-2013 |
| | | WO 2013134756 A1 | 12-09-2013 |
| US 2018265794 A1 | 20-09-2018 | EP 3353269 A1 | 01-08-2018 |
| | | SE 1551213 A1 | 23-03-2017 |
| | | US 2018265794 A1 | 20-09-2018 |
| | | WO 2017052454 A1 | 30-03-2017 |

EPO FORM P0459

For more details about this annex : see Official Journal of the European Patent Office, No. 12/82